# EUROPÄISCHE PATENTANMELDUNG

(11) **EP 2 063 228 A1**
(43) Veröffentlichungstag der Anmeldung: **27.05.2009**
(21) Anmeldenummer: 07022613.9
(22) Anmeldetag: 21.11.2007
(51) Int. Cl.: G01D 3/08

(54) **Verfahren und Vorrichtung zum Ermitteln der Güte von Messergebnissen eines Prozesses einer grosstechnischen Anlage**

(71) Anmelder: SIEMENS AKTIENGESELLSCHAFT, 80333 München (DE)
(72) Erfinder: Krause, Roman, 91056 Erlangen (DE); Kunze, Ulrich, Dr., 91088 Bubenreuth (DE); Pels Leusden, Christoph, Dr., 90419 Nürnberg (DE); Raab, Stefan, Dr., 91052 Erlangen (DE); Weissenberger, Bernd, 91056 Erlangen (DE)

(57) **Zusammenfassung**

Ein Verfahren und eine Vorrichtung zum Ermitteln der Güte von Messergebnissen eines Prozesses einer großtechnischen Anlage, insbesondere einer Kraftwerksanlage, umfassen: Aufnehmen (10, 20) von Messergebnissen mehrerer Messgrößen (M1, M2) an der großtechnischen Anlage, Erstellen eines Prozessmodells (60) der großtechnischen Anlage, Einsetzen (70) mindestens eines aufgenommenen Messergebnisses eines ersten Teils der Messgrößen (M1) in das Prozessmodell und Ermitteln mindestens eines Modellergebnisses einer Modellgröße des Prozessmodells sowie
Vergleichen (80) mindestens eines aufgenommenen Messergebnisses mindestens eines zweiten Teils der Messgrößen (M2) mit dem mindestens einen Modellergebnis der Modellgröße.

## Beschreibung

Die Erfindung betrifft ein Verfahren und eine Vorrichtung zum Ermitteln der Güte von Messergebnissen eines Prozesses einer großtechnischen Anlage, insbesondere einer Kraftwerksanlage.

Großtechnische Anlagen, wie beispielsweise Gasturbinen oder Dampfturbinen, sind mit einer Vielzahl von Sensoren bestückt. Diese Sensoren sind in der Regel mit weiteren Bauelementen zu so genannten Messketten zusammengefasst, mittels denen Messergebnisse geliefert werden, anhand derer dann die großtechnische Anlage überwacht und gesteuert werden kann. Dabei ist eine hohe Qualität der Messergebnisse erforderlich, da diese die Grundlage für die Überwachung und Steuerung der großtechnischen Anlage darstellen.

Insbesondere ist es wichtig, Ausfälle und Störungen von Sensoren bzw. den gesamten Messketten zu erkennen, so dass Fehlsteuerungen der großtechnischen Anlage vermieden werden können.

Offensichtliche Fehler an Sensoren und Messketten, z.B. das Fehlen eines Signals an einem Messkettenausgang, sind meist einfach zu erkennen. Schwierig wird das Erkennen von Fehlern immer dann, wenn ein Signal am Messkettenausgang ähnliche Eigenschaften aufweist, wie bei einer intakten Messkette. Derartige Fehler werden auch als verdeckte Fehler bezeichnet.

Üblich ist es, die Messergebnisse der Sensoren und Messketten anhand ihres physikalisch und technisch sinnvollen Messbereichs zu prüfen. Liegt ein Messergebnis außerhalb dieses Messbereichs vor, scheint der Sensor oder die Messkette fehlerhaft zu sein.

Weiterhin ist es üblich, Sensoren und Messketten redundant, also mehrfach, auszuführen und deren Messergebnisse zu vergleichen. Von sensiblen großtechnischen Anlagen ist es bekannt, deren Sensoren oder Messketten dreifach auszuführen. Es werden dann die Messergebnisse derjenigen Sensoren bzw. Messketten weiter verwendet, die am besten übereinstimmen. Dieses Verfahren wird auch als Ausreißer-Test oder als Zweiaus-drei-Schaltung bezeichnet. Diese Verfahren liefern zwar gute Fehlerkennungsmöglichkeiten, erfordern aber einen hohen Aufwand.

Bekannt sind ferner Verfahren, bei denen Redundanzen zwischen verschiedenen Messgrößen der großtechnischen Anlage genutzt werden. Derartige Redundanzen entstehen dadurch, dass sich zwischen verschiedenen Messgrößen auf Grund physikalischer Gesetze Abhängigkeiten zwischen den Messergebnissen der Messgrößen in bestimmten Teilen der großtechnischen Anlage nutzen lassen, mit denen sich die Plausibilität einzelner Messergebnisse überprüfen lässt. So kann beispielsweise anhand des physikalischen Gesetzes der Energieerhaltung oder der Masseerhaltung ein Vergleich zwischen Messgrößen an einem Eingang der großtechnischen Anlage mit Messgrößen an einem Ausgang der großtechnischen Anlage durchgeführt werden, um abzuschätzen, ob die Messergebnisse am Eingang im Vergleich zu jenen am Ausgang plausibel erscheinen. Problematisch sind derartige Verfahren, wenn mehrere Sensoren oder Messketten Messergebnisse mit relativ großen Fehlern liefern. Es wird dann das gesamte Verfahren unbrauchbar, da es nicht mehr konvergiert und sich die fehlerhaften Sensoren bzw. Messketten nicht mehr eindeutig identifizieren lassen.

Es ist eine Aufgabe der Erfindung ein Verfahren und eine Vorrichtung zum Ermitteln der Güte von Messergebnissen eines Prozesses einer großtechnischen Anlage zu schaffen, bei dem die oben genannten Probleme überwunden sind und insbesondere die Güte von Messergebnissen auf kostengünstige und zugleich sichere Art und Weise ermittelt werden kann.

Die Aufgabe ist erfindungsgemäß mit einem Verfahren gemäß Anspruch 1 und einer Vorrichtung gemäß Anspruch 6 gelöst. Vorteilhafte Weiterbildungen der Erfindung sind in den abhängigen Ansprüchen beschrieben.

Gemäß der Erfindung ist ein Verfahren zum Ermitteln der Güte von Messergebnissen eines Prozesses einer großtechnischen Anlage geschaffen, insbesondere einer Kraftwerksanlage, mit den Schritten: Aufnehmen von Messergebnissen mehrerer Messgrößen an der großtechnischen Anlage, Erstellen eines Prozessmodells der großtechnischen Anlage, Einsetzen mindestens eines aufgenommenen Messergebnisses eines ersten Teils der Messgrößen in das Prozessmodell und Ermitteln mindestens eines Modellergebnisses einer Modellgröße des Prozessmodells sowie Vergleichen mindestens eines aufgenommenen Messergebnisses mindestens eines zweiten Teils der Messgrößen mit dem mindestens einem Modellergebnis der Modellgröße. Die erfindungsgemäße Vorrichtung weist entsprechende Mittel zum Durchführen der oben genannten Schritte des erfindungsgemäßen Verfahrens auf.

Mit dem erfindungsgemäßen Verfahren und der dazugehörigen Vorrichtung ist es möglich, unglaubwürdige bzw. unplausibel erscheinende Messergebnisse von Sensoren und Messketten aufzufinden und die derart ermittelten Messergebnisse, insbesondere in der Prozessleittechnik der zugehörigen großtechnischen Anlage, derart weiter zu berücksichtigen, dass eine mangelhafte Qualität des Messergebnisse keinen Einfluss auf die weitere Prozessüberwachung und Prozesssteuerung hat. Das erfindungsgemäße Verfahren kann dabei automatisiert in der Prozessleittechnik der großtechnischen Ablage ablaufen. Kern der erfindungsgemäßen Lösung ist ein Prozessmodell, insbesondere ein thermodynamisches Modell der großtechnischen Anlage, bei dem mit Hilfe physikalischer Gleichungen, insbesondere zwischen Temperatur, Druck, Massefluss und Enthalpie, die Eigenschaften der einzelnen Komponenten der großtechnischen Anlage beschrieben werden. Ferner werden die Randbedingungen der großtechnischen Anlage in dem Prozessmodell berücksichtigt. Dabei werden nachfolgend an der großtechnischen Anlage so genannte wichtige Messgrößen definiert, die sich von so genannten sonstigen Messgrößen dadurch unterscheiden, dass sie im Grunde genommen ausreichen, um das Verhalten der großtechnischen Anlage mit Hilfe des Prozessmodels zu simulieren. Die wichtigen Messgrößen sind also "unbedingt erforderliche" Größen. Diese wichtigen Messgrößen sind in der Regel vergleichsweise wenige Größen (ca. 5 bis 20). Diese wichtigen Messgrößen werden mit ihren Messergebnissen erfindungsgemäß in das Prozessmodell eingesetzt und auf ihrer Basis mindestens ein Modellergebnis einer Modellgröße des Prozessmodells ermittelt. Die Messgrößen können dabei im Hinblick auf ihre Messwerte und ihre Messunsicherheit in das Prozessmodell eingesetzt werden. Mittels des Prozessmodells werden dann Modellergebnisse ermittelt und insbesondere errechnet, die im Hinblick auf ihren Messwert und ihre Unsicherheit zumindest einer der realen Messgrößen der großtechnischen Anlage entsprechen. In einem weiteren Schritt können dann die derart ermittelten Modellwerte und Modellunsicherheiten einer einzelnen Modellgröße mit den zugehörigen Messwerten und Messunsicherheiten der entsprechenden Messgröße verglichen werden. Insbesondere können auch alle Messgrößen mit zugehörigen Modellgrößen verglichen werden. Es wird insgesamt angestrebt, Modellgrößen mittels des Prozessmodell zu errechnen, die den aufgenommen Messgrößen in Anzahl und Inhalt entsprechen. Der Vergleich mindestens eines aufgenommenen Messergebnisses mindestens eines zweiten Teils der Messgrößen, den so genannten sonstigen Messgrößen, mit dem mindestens einen Modellergebnis der Modellgrößen zeigt dann Unplausibilitäten in den ermittelten Messergebnissen auf.

Das derartige Vorgehen und die zugehörige Vorrichtung können vergleichsweise automatisiert abgebildet werden und liefern mit hoher Genauigkeit und zugleich einer breiten Aussagekraft eine Plausibilitätsprüfung für, sofern gewünscht, alle relevanten Messergebnisse eines Prozesses einer großtechnischen Anlage.

In einer bevorzugten Ausführungsform der erfindungsgemäßen Lösung werden in einem weiteren Schritt die oben genannten wichtigen Messgrößen mit ihren Messergebnissen zunächst einer Plausibilitätsprüfung unterzogen, bevor sie in das Prozessmodell eingesetzt werden. Die Plausibilitätsprüfung umfasst ein Prüfen des mindestens einen aufgenommenen Messergebisses des ersten Teils der Messgrößen auf Plausibilität, insbesondere im Vergleich zu unteren und/oder oberen Grenzwerten. Wenn die Plausibilitätsprüfung bei einer Messgröße anspricht, wird das erfindungsgemäße Verfahren zunächst abgebrochen und der Sensor bzw. die Messkette dieser Messgröße repariert. Da es sich, wie oben erläutert, um eine wichtige Messgröße handelt, muss zunächst dafür gesorgt werden, dass diese Messgröße ordnungsgemäße Eingangswerte liefert. Da erfindungsgemäß aber nur wenige derartige Messgrößen erforderlich sind, ist entsprechend auch die genannte Plausibilitätsprüfung mit vergleichsweise wenig Aufwand möglich.

Erfindungsgemäß bevorzugt wird ferner bei dem oben genannten Vergleich mindestens eines aufgenommenen Messergebnisses mindestens eines zweiten Teils der Messgrößen mit dem mindestens einen Modellergebnis der Modellgröße ein Ersatzergebnis für ein aufgenommenes Messergebnis erzeugt, das im durchgeführten Vergleich mit dem mindestens einen Modellergebnis unplausibel erschien. Es wird also erfindungsgemäß auf der Grundlage des Prozessmodells nicht nur eine Güteprüfung von Messergebnissen durchgeführt, sondern dass Prozessmodell wird ferner dazu verwendet, unplausibel erscheinende Messergebnisse durch Ersatzergebnisse zu ersetzen.

Besonders bevorzugt werden bei dem erfindungsgemäßen Verfahren und der zugehörigen Vorrichtung in einem weiteren Schritt diese erzeugten Ersatzergebnisse derart weiterverarbeitet, dass sie neben aufgenommenen und im durchgeführten Vergleich mit dem mindestens einen Modellergebnis plausibel erscheinenden Messergebnissen in das Prozessmodell eingesetzt werden. Die derart eingesetzten Messergebnisse und Ersatzergebnisse bilden dann die Grundlage für erneutes Ermitteln von Modellergebnissen der Modellgrößen des Prozessmodells. Ein nachfolgender Vergleich mindestens eines Teils der aufgenommenen Messergebnisse und/oder der erzeugten Ersatzergebnisse mit den neuen Modellergebnissen der Modellgrößen gibt weitere Auskunft über die Güte der ursprünglich ermittelten Messergebisse. Insbesondere können dabei alle Messergebnissen und Ersatzergebnisse mit den Modellergebnissen verglichen werden. Der Vergleich kann wiederum im Hinblick auf absolute Werte bzw. Messwerte und Unsicherheiten der einzelnen Messgrößen erfolgen. Der derartige Vergleich ist schärfer als der erstgenannte Vergleich der aufgenommenen Messergebnisse mit Modellergebnissen, da die neuerlichen Modellergebnisse eine kleinere Unsicherheit besitzen. Entsprechend ist auch die Qualität der derartigen Güteprüfung von Messergebnissen höher.

Erfindungsgemäß ist es schließlich bevorzugt, für ein aufgenommenes Messergebnis und/oder ein zuvor erzeugtes Ersatzergebnis, das im durchgeführten erneuten Vergleich mit den Modellergebnissen unplausibel erschien, ein Ersatzergebnis zu erzeugen. Die Abweichungen, die sich dann zwischen ermittelten ursprünglichen Messergebnissen, erzeugten Ersatzergebnissen und erneut ermittelten Modellergebnissen ergeben, bieten eine gute Grundlage, um nicht nur Fehler an Sensoren und Messketten zu ermitteln, sondern auch die Gründe und Ursachen für diese Fehler zu erkennen.

Erfindungsgemäß bevorzugt werden schließlich auch die als unplausibel erkannten Ergebnisse in einer gestaffelten Liste zusammengefasst. Dabei können als erster Listeneintrag diejenigen Messgrößen mit ihren Messergebnissen, insbesondere Messwerten und Messunsicherheiten, eingetragen werden, die bei der Plausibilitätsprüfung der wichtigen Messgrößen, insbesondere anhand von überschrittenen unteren und/oder oberen Grenzwerten, aufgefallen sind. Als weiterer Listeneintrag werden dann jene Messgrößen mit ihren Messergebnissen aufgeführt, die im Vergleich mit zugehörigen Modellergebnissen des Prozessmodells aufgefallen sind. Ein weiterer Listeneintrag sind schließlich jene Messgrößen mit ihren Messergebnissen und/oder Ersatzergebnissen, die beim erneuten Vergleich mindestens eines Teils der aufgenommenen Messergebnisse und/oder der erzeugten Ersatzergebnisse mit erneut errechneten Modellergebnissen der Modellgrößen aufgefallen sind. Es entsteht dadurch eine gestaffelte Liste unglaubwürdiger Messgrößen und entsprechend unglaubwürdiger Sensoren bzw. Messketten und es liegen zugleich errechnete Ersatzwerte für diese als unglaubwürdig eingestuften Messgrößen vor. Die derartige Liste bildet sowohl für eine automatisierte Auswertung als auch eine Auswertung durch Fachleute eine hervorragende Grundlage, um schnell Fehler und Probleme an Sensoren und Messketten einer großtechnischen Anlage aufzufinden. Aufgrund der sich erfindungsgemäß ergebenden zusätzlichen Kenntnisse über die großtechnische Anlage können insbesondere verdeckte Messfehler schnell und kostengünstig gefunden werden. Darüber hinaus kann die großtechnische Anlage genauer gesteuert werden und es können auch für die Messgrößen kleinere Toleranzfelder angegeben und überwacht werden. Fehlfunktionen der großtechnischen Anlage können so insgesamt stärker als bisher vermieden und die Anlagensicherheit erhöht werden. Fehler in Messketten der Prozessleittechnik von großtechnischen Anlagen können erfindungsgemäß bereits im Anfangsstadium erkannt werden. Entsprechend kann frühzeitig eine Reparatur der Messketten durchgeführt werden. Wenn eine Reparatur nicht sofort möglich sein sollte, liefern das erfindungsgemäße Verfahren und die zugehörige Vorrichtung Ersatzwerte, die temporär in der Prozessleittechnik der großtechnischen Anlage anstatt der tatsächlichen Messergebnisse verwendet werden können.

Schließlich ermöglicht es das erfindungsgemäße Verfahren und die zugehörige Vorrichtung auch, das Prozessmodell der großtechnischen Anlage anhand der ermittelten Messergebnisse, der errechneten Modellergebnisse und der erzeugten Ersatzergebnisse fortlaufend zu optimieren. Das Prozessmodell kann dann vorteilhaft auch für andere Zwecke, beispielsweise eine Auslastungsplanung bzw. Kapazitätsplanung an der großtechnischen Anlage genutzt werden.

Nachfolgend wird ein Ausführungsbeispiel der erfindungsgemäßen Lösung anhand der beigefügten schematischen Zeichnungen näher erläutert. Es zeigt:

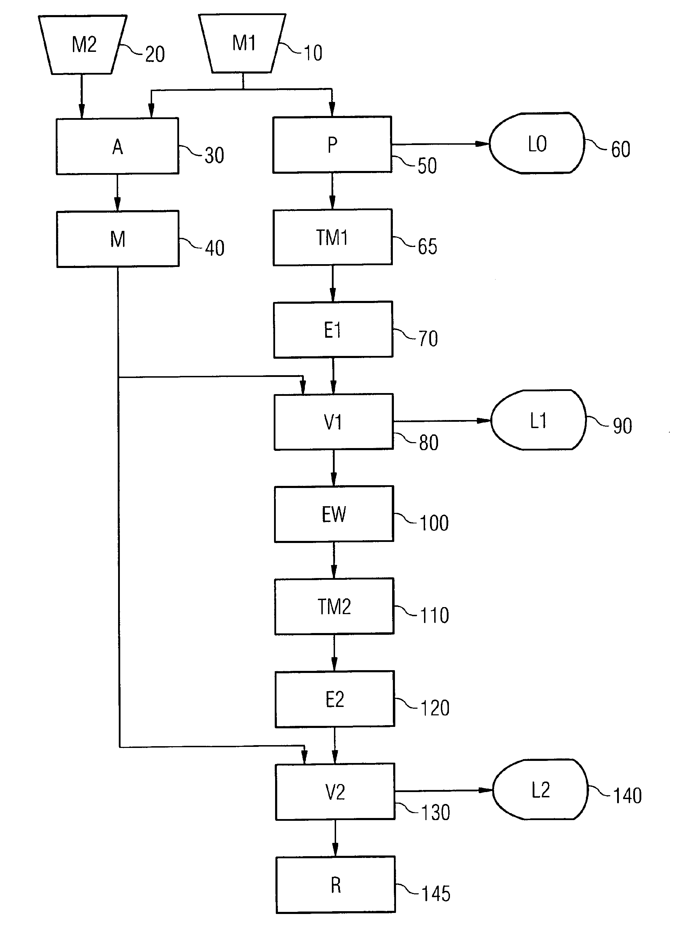

Die Figur, ein Ablaufschema der wesentlichen Schritte und zugehörigen Mittel eines Ausführungsbeispiels des erfindungsgemäßen Verfahrens und der zugehörigen Vorrichtung.

Bei dem in der Figur veranschaulichten Verfahren werden mit Hilfe jeweils zugeordneter Mittel folgende Schritte ausgeführt: Von einer (nicht dargestellten) großtechnischen Anlage werden in einem Schritt 10 so genannte wichtige Messgrößen M1 mit ihren zugehörigen Messergebnissen und in einem Schritt 20 so genannte sonstige Messgrößen M2 mit ihren zugehörigen Messergebnissen von zu beurteilenden (nicht dargestellten) Messketten erfasst. Die wichtigen Messgrößen M1 unterscheiden sich von des sonstigen Messgrößen M2 dadurch, dass sie ausreichen, um den Prozess der großtechnischen Anlage mit Hilfe eines Modells, vorliegend eines thermodynamischen Prozessmodells, zu simulieren.

In einem Schritt 30 werden die Messgrößen M1 und M2 mittels einer Zusammenfassung A zu einer Gesamtheit der Messgrößen M kombiniert, welche in einem Schritt 40 bereitgestellt wird. Jede derart bereitgestellte Messgröße besitzt als Messergebnis zumindest einen Messwert und eine Messunsicherheit.

In einem weiteren Schritt 50 werden die oben genannten wichtigen Messgrößen M1 einer Plausibilitätsprüfung P unterzogen, wobei die einzelnen Messwerte der Messgrößen mit jeweiligen Messbereichsgrenzen verglichen werden. Als Ergebnis der Plausibilitätsprüfung wird ermittelt, ob jede einzelne wichtige Messgröße M1 glaubwürdig oder unglaubwürdig ist. Liefert die Plausibilitätsprüfung P unglaubwürdige Messwerte oder Messunsicherheiten, werden diese in einer Liste L0 in einem Schritt 60 protokolliert, diese Liste L0 wird einem Bediener angezeigt und das Verfahren gegebenenfalls abgebrochen, damit der Bediener die unglaubwürdigen Messgrößen überprüfen und die zugehörigen Messketten gegebenenfalls reparieren kann.

Die erfolgreich auf Plausibilität geprüften Messgrößen M1 werden nachfolgend mit einem Schritt 65 an ein Modell, vorliegend ein thermodynamisches Prozessmodell, TM1 übergeben. Mit Hilfe des thermodynamischen Prozessmodells TM1 werden in einem weiteren Schritt 70 für einzelne Modellgrößen, die in Anzahl und Inhalt den Messgrößen M entsprechen, Modellergebnisse E1 von zugehörigen Modellgrößen ermittelt. Die Modellergebnisse E1 geben dabei ebenfalls jeweils den Wert und die Unsicherheit der zugehörigen Modellgröße an.

Innerhalb eines Vergleichs V1 werden nachfolgend in einem Schritt 80 die Messergebnisse der Messgrößen M in Form ihrer Messwerte und Messunsicherheiten mit den Modellergebnissen E1 verglichen. Dabei werden Messgrößen, die unplausibel hohe Abweichungen zu den berechneten Modellergebnissen aufweisen, ausgesondert und in einer Liste L1 in einem Schritt 90 protokolliert.

Für die derart ausgesonderten Messgrößen werden in einem Schritt 100 mittels des Prozessmodells Ersatzergebnisse bzw. Ersatzwerte EW erzeugt, indem anstelle von Messergebnissen die jeweils ermittelten Modellergebnisse E1 herangezogen werden. Diese Modellergebnisse E1 werden dabei mit der Unsicherheit versehen, die sich aus dem thermodynamischen Modell TM1 ergibt. Die Ersatzwerte EW bzw. Ersatzergebnisse und die nicht ausgesonderten Messgrößen bzw. deren Messergebnisse werden in einem nachfolgenden Schritt 110 einem thermodynamischen Modell TM2 übergeben. Dieses thermodynamische Modell TM2 kann weitgehend dem thermodynamischen Modell TM1 entsprechen, kann aber vorteilhaft auch detaillierter und präziser als das erstgenannte thermodynamische Modell gestaltet sein. In einem weiteren Schritt 120 erfolgt eine erneute Berechnung von Modellergebnissen E2 für alle relevanten Modellgrößen, welche jeweils den zugehörigen Messgrößen entsprechen. Bei der Berechnung gemäß Schritt 120 werden jedoch nur die plausibel erscheinenden Messergebnisse und anstelle der unplausibel erscheinenden Messergebnisse die jeweils zugeordneten Ersatzergebnisse verwendet. Die neuerliche Berechnung führt auf der Grundlage des thermodynamischen Modells TM2 zu neuen Modellergebnissen E2.

Diese Modellergebnisse E2 werden anschließend in einem Schritt 130 mittels eines Vergleichs V2 mit den jeweiligen Messwerten und Messunsicherheiten der Messgrößen M verglichen. Dabei werden erneut Messgrößen M, die unplausibel hohe Abweichungen zu den Modellergebnissen E2 aufweisen, ausgesondert und in einem Schritt 140 in einer Liste L2 protokolliert. Der Vergleich V2 ist dabei wesentlich schärfer als der Vergleich V1, da die neuen Modellergebnisse E2 eine kleinere Unsicherheit als die Modellergebnisse E1 besitzen.

Die derart ausgesonderten Messergebnisse der Messgrößen M werden durch zugehörige Modellergebnisse E2 ersetzt.

Das Resultat R ist in einem Schritt 145 eine Zusammenstellung von Werten und Unsicherheiten aller Messgrößen M, von denen ein Teil durch Ersatzergebnisse substituiert sein kann. Es wird ferner eine gestaffelte Liste (L0, L1, L2) von unglaubwürdigen Messgrößen M mit ihren zugehörigen Ersatzergebnissen bereitgestellt.

Mit der derartigen Vorgehensweise und den zugehörigen Mitteln der entsprechend gestalteten Vorrichtung können verdeckte Messfehler an einer großtechnischen Anlage leicht gefunden und die Anlage insgesamt genauer gesteuert werden. Fehlfunktionen der großtechnischen Anlage werden vermieden und die Anlagensicherheit erhöht. Fehler an Sensoren und Messketten der großtechnischen Anlage sowie deren Prozessleittechnik lassen sich mit der beschriebenen Vorgehensweise bereits im Anfangsstadium erkennen. Reparaturen können entsprechend frühzeitig durchgeführt werden. Falls eine Reparatur nicht sofort möglich sein sollte, liefert die derartige Vorgehensweise mit ihren zugehörigen Mitteln Ersatzergebnisse, die temporär in der Prozessleittechnik der großtechnischen Anlage anstatt von tatsächlich ermittelten Messergebnissen verwendet werden können.

## Patentansprüche

1. Verfahren zum Ermitteln der Güte von Messergebnissen eines Prozesses einer großtechnischen Anlage, insbesondere einer Kraftwerksanlage, mit den Schritten:
Aufnehmen (10, 20) von Messergebnissen mehrerer Messgrößen (M1, M2) an der großtechnischen Anlage,
Erstellen eines Prozessmodells (65) der großtechnischen Anlage,
Einsetzen (70) mindestens eines aufgenommenen Messergebnisses eines ersten Teils der Messgrößen (M1) in das Prozessmodell und Ermitteln mindestens eines Modellergebnisses einer Modellgröße des Prozessmodells sowie
Vergleichen (80) mindestens eines aufgenommenen Messergebnisses mindestens eines zweiten Teils der Messgrößen (M2) mit dem mindestens einen Modellergebnis der Modellgröße.

2. Verfahren nach Anspruch 1, mit dem Schritt:
Prüfen (50) des mindestens einen aufgenommenen Messergebnisses des ersten Teils der Messgrößen auf Plausibilität vor dessen Einsetzen in das Prozessmodell.

3. Verfahren nach Anspruch 1 oder 2, mit dem Schritt:
Erzeugen (100) eines Ersatzergebnisses für ein aufgenommenes Messergebnis, das im durchgeführten Vergleich mit dem mindestens einen Modellergebnis unplausibel erschien.

4. Verfahren nach Anspruch 3, mit den Schritten:
Einsetzen (120) der aufgenommenen und im durchgeführten Vergleich mit dem mindestens einen Modellergebnis plausibel erscheinenden Messergebnisse sowie der erzeugten Ersatzergebnisse in ein Prozessmodell und erneutes Ermitteln von Modellergebnissen der Modellgrößen des Prozessmodells sowie
erneutes Vergleichen (130) mindestens eines Teils der aufgenommenen Messergebnisse und/oder der erzeugten Ersatzergebnisse mit den Modellergebnissen der Modellgrößen.

5. Verfahren nach Anspruch 4, mit dem Schritt:
Erzeugen (145) eines Ersatzergebnisses für ein aufgenommenes Messergebnis und/oder ein zuvor erzeugtes Ersatzergebnis, das im durchgeführten erneuten Vergleich mit den Modellergebnissen unplausibel erschien.

6. Vorrichtung zum Ermitteln der Güte von Messergebnissen eines Prozesses einer großtechnischen Anlage, insbesondere einer Kraftwerksanlage, mit:
Mitteln zum Aufnehmen von Messergebnissen mehrerer Messgrößen (M1, M2) an der großtechnischen Anlage,
einem Mittel zum Erstellen eines Prozessmodells (TM1) der großtechnischen Anlage,
einem Mittel zum Einsetzen mindestens eines aufgenommenen Messergebnisses eines ersten Teils der Messgrößen (M1) in das Prozessmodell (TM1) und zum Ermitteln mindestens eines Modellergebnisses (E1) einer Modellgröße des Prozessmodells sowie
einem Mittel zum Vergleichen (V1) mindestens eines aufgenommenen Messergebnisses mindestens eines zweiten Teils der Messgrößen (M2) mit dem mindestens einen Modellergebnis der Modellgröße.

7. Vorrichtung nach Anspruch 6, mit
einem Mittel zum Prüfen (P) des mindestens einen aufgenommenen Messergebnisses des ersten Teils der Messgrößen (M1) auf Plausibilität vor dessen Einsetzen in das Prozessmodell.

8. Vorrichtung nach Anspruch 6 oder 7, mit
einem Mittel zum Erzeugen eines Ersatzergebnisses (EW) für ein aufgenommenes Messergebnis, das im durchgeführten Vergleich mit dem mindestens einen Modellergebnis unplausibel erschien.

9. Vorrichtung nach Anspruch 8, mit
einem Mittel zum Einsetzen der aufgenommenen und im durchgeführten Vergleich mit dem mindestens einen Modellergebnis plausibel erscheinenden Messergebnisse sowie der erzeugten Ersatzergebnisse in ein Prozessmodell (TM2) und zum erneuten Ermitteln von Modellergebnissen (E2) der Modellgrößen des Prozessmodells (TM2) sowie
einem Mittel zum erneuten Vergleichen (V2) mindestens eines Teils der aufgenommenen Messergebnisse und/oder der erzeugten Ersatzergebnisse mit den Modellergebnissen der Modellgrößen.

10. Vorrichtung nach Anspruch 9, mit
einem Mittel zum Erzeugen (R) eines Ersatzergebnisses für ein aufgenommenes Messergebnis und/oder ein zuvor erzeugtes Ersatzergebnis, das im durchgeführten erneuten Vergleich mit den Modellergebnissen unplausibel erschien.
